(19) Europäisches Patentamt
European Patent Office
Office européen des brevets

(11) **EP 4 811 908 A1**

(12) **EUROPEAN PATENT APPLICATION**
published in accordance with Art. 153(4) EPC

(43) Date of publication:
**23.09.2026 Bulletin 2026/39**

(21) Application number: **25745325.8**

(22) Date of filing: **22.01.2025**

(51) International Patent Classification (IPC):
***H04W 72/23*** (2023.01) ***H04W 72/0446*** (2023.01)
***H04W 72/0457*** (2023.01) ***H04W 56/00*** (2009.01)
***H04W 8/24*** (2009.01) ***H04W 24/08*** (2009.01)
***H04L 5/00*** (2006.01) ***H04L 1/00*** (2006.01)

(52) Cooperative Patent Classification (CPC):
**H04L 1/00; H04L 5/00; H04W 8/24; H04W 24/08; H04W 56/00; H04W 72/04; H04W 72/0446; H04W 72/0457; H04W 72/23**

(86) International application number:
**PCT/KR2025/001244**

(87) International publication number:
**WO 2025/159500 (31.07.2025 Gazette 2025/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.01.2024 KR 20240011012**

(71) Applicant: **Samsung Electronics Co., Ltd.**
**Suwon-si, Gyeonggi-do 16677 (KR)**

(72) Inventors:
- **PARK, Sungjin**
**Suwon-si, Gyeonggi-do 16677 (KR)**
- **KIM, Younsun**
**Suwon-si, Gyeonggi-do 16677 (KR)**
- **RYU, Hyunsuk**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) METHOD AND DEVICE FOR TRANSMITTING AND RECEIVING DATA INFORMATION IN WIRELESS COMMUNICATION SYSTEM

(57) The present disclosure relates to a 5G or 6G communication system for supporting higher data transmission rates. The present disclosure relates to a method for transmitting and receiving data information in a wireless communication system and a device capable of performing same.

FIG. 9

Report UE capability information related to measurement gap
900
BS configures measurement gap for UE
910
UE performs measurement periodically
920
BS indicates adaptive measurement gap to UE
930
UE adaptively performs measurement according to indication from BS
940

EP 4 811 908 A1

## Description

[Technical Field]

The disclosure relates to operations of a terminal and a base station in a wireless communication system. Specifically, the disclosure relates to a method for transmitting/receiving data information in a wireless communication system and a device capable of performing same.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation

distributed computing technology for implementing services at levels of complexity exceeding the limit of UE operation capability by utilizing ultra-high-performance communication and computing resources.

With the advance of wireless communication systems as described above, various services can be provided, and accordingly there is a need for ways to smoothly provide these services.

[Disclosure]

[Technical Problem]

Embodiments set forth herein are to provide a device and a method capable of effectively providing services in a mobile communication system. Specifically, embodiments set forth herein are to provide a method and a device for transmitting/receiving data information in a measurement gap.

[Technical Solution]

In view of the foregoing, an aspect of the disclosure provides a method performed by a terminal in a communication system, the method including: receiving, from a base station, configuration information regarding a measurement gap; receiving, from the base station, downlink control information (DCI) including information indicating whether to perform a measurement in a specific measurement gap; identifying whether to perform a measurement in the specific measurement gap, based on the configuration information and the information indicating whether to perform the measurement; and based on the identifying, performing the measurement or data transmission/reception in the specific measurement gap.

The DCI may be DCI for scheduling data. Further, the specific measurement gap may correspond to one measurement gap. Also, the specific measurement gap may exist after a specific offset after a last symbol of a control resource set (CORESET) in which the DCI is received.

Also, a method performed by a base station in a communication system may include: transmitting, to the UE, configuration information regarding a measurement gap; and transmitting downlink control information (DCI) including information indicating whether to perform a measurement in a specific measurement gap to the UE, wherein whether the measurement or data transmission/reception is performed in the specific measurement gap is determined based on the configuration information and the information indicating whether the measurement is performed.

Also, a terminal in a communication system may include: a transceiver; and a controller configured to receive, from a base station, configuration information regarding a measurement gap, receive, from the base station, downlink control information (DCI) including information indicating whether to perform a measurement in a specific measurement gap, identify whether to perform a measurement in the specific measurement gap, based on the configuration information and the information indicating whether to perform the measurement, and perform the measurement or data transmission/reception in the specific measurement gap, based on the identifying.

A base station in a communication system may include: a transceiver; and a controller configured to transmit, to the UE, configuration information regarding a measurement gap, and transmit downlink control information (DCI) including information indicating whether to perform a measurement in a specific measurement gap to the UE, wherein whether the measurement or data transmission/reception is performed in the specific measurement gap is determined based on the configuration information and the information indicating whether the measurement is performed.

[Advantageous Effects]

Embodiments set forth herein provide a device and a method capable of effectively providing services in a mobile communication system. In particular, according to at least one embodiment of the disclosure, a terminal and a base station can reduce traffic delays and perform effective data transmission/reception by transmitting /receiving data in a measurement gap.

[Description of Drawings]

FIG. 1 illustrates a basic structure of a time-frequency domain, which is a radio resource domain used to transmit data or control channels, in a 5G communication system.

FIG. 2 illustrates a structure of a frame, a subframe, and a slot in a 5G communication system.

FIG. 3 illustrates an example of a bandwidth part configuration in a 5G wireless communication system.

FIG. 4 illustrates an example of a control resource set (CORESET) used to transmit a downlink control channel in a 5G

communication system.
FIG. 5 illustrates an example of a basic unit of time and frequency resources constituting a downlink control channel available in a 5G communication system.
FIG. 6 illustrates an example of radio protocol structure of a base station and a UE in single cell, carrier aggregation (CA), and dual connectivity (DC) situations.
FIG. 7 is a diagram illustrating an example of a situation in which a measurement gap and an SS/PBCH block are transmitted/received according to an embodiment of the disclosure;
FIG. 8 is a diagram illustrating an example of a measurement gap configuration method according to an embodiment of the disclosure.
FIG. 9 is a diagram illustrating an example of a procedure in which a UE performs operations related to a measurement gap according to an embodiment of the disclosure.
FIG. 10 illustrates a structure of a UE in a wireless communication system according to an embodiment of the disclosure;
FIG. 11 illustrates a structure of a base station in a wireless communication system according to an embodiment of the disclosure.

[Mode for Invention]

Hereinafter, embodiments of the disclosure will be described in detail with reference to the accompanying drawings.
In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.
For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.
The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.
In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.
Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of

operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink and employs a single carrier frequency division multiple access (SC-FDMA) scheme in an uplink. The above multiple access scheme may separate data or control information of respective users by allocating and operating time-frequency resources for carrying the data or control information for each user so as to avoid overlapping therebetween, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/$km^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used

between services in order to satisfy different requirements of the respective services. Of course, 5G is not limited to the three services described above.

Hereinafter, a frame structure of a 5G system will be described in more detail with reference to the accompanying drawings.

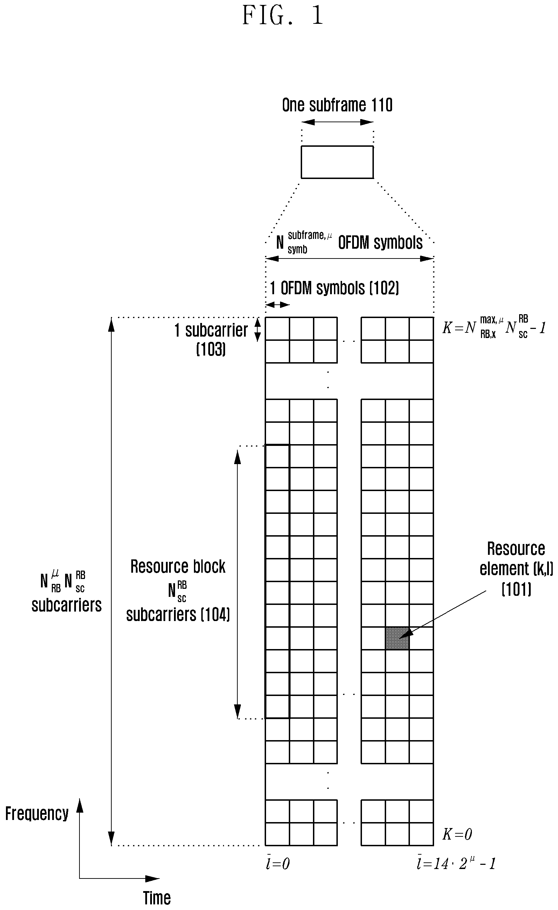

FIG. 1 illustrates a basic structure of a time-frequency domain, which is a radio resource domain used to transmit data or control channels, in a 5G communication system.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104.

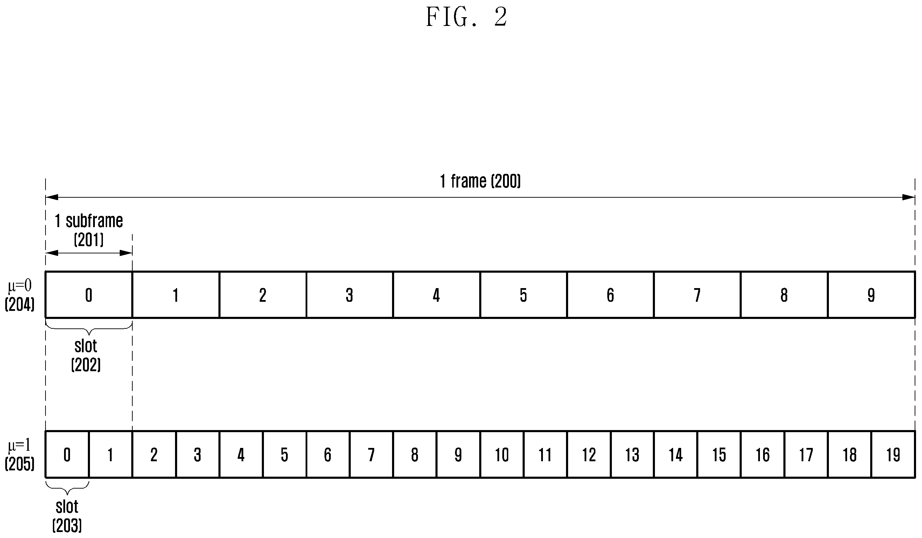

FIG. 2 illustrates a structure of a frame, a subframe, and a slot in a 5G communication system.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$ ). One subframe 201 may include one or multiple slots 202 and 203, and the number of slots 202 and 203 per one subframe 201 may vary depending on configuration values μ for the subcarrier spacing 204 or 205. The example of FIG. 2 shows the case of μ=0 (204) and the case of μ=1 (205) as a configuration value for a subcarrier spacing. In the case of μ=0 (204), one subframe 201 may include one slot 202, and in the case of μ=1 (205), one subframe 201 may include two slots 203. That is, the number of slots per one subframe $N_{slot}^{subframe,\mu}$ may differ depending on the subcarrier spacing configuration value μ, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration μ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Next, a bandwidth part (BWP) configuration in a 5G communication system will be described in detail with reference to the accompanying drawings.

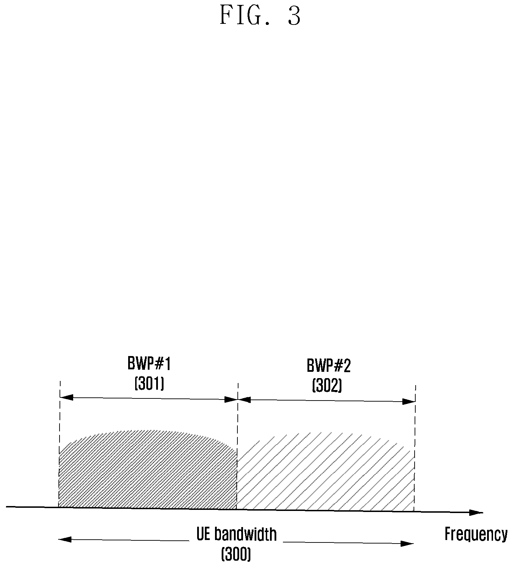

FIG. 3 illustrates an example of a bandwidth part configuration in a 5G wireless communication system.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given below.

[Table 2]

```
BWP ::=                     SEQUENCE {
    bwp-Id                          BWP-Id,
     (bandwidth part identifier)
    locationAndBandwidth            INTEGER (1..65536),
    (bandwidth part location)
    subcarrierSpacing               ENUMERATED {n0, n1, n2, n3, n4, n5},
    (subcarrier spacing)
    cyclicPrefix                ENUMERATED { extended }
    (cyclic prefix)
}
```

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space, which may be used to transmit a PDCCH for receiving system information (which may correspond to remaining system information (RMSI) or system information block 1 (SIB1)) necessary for initial access, through the MIB on a physical broadcasrt channel (PBCH) in the initial access step. Each of the control resource set and the search space configured through the MIB may be considered identity (ID) 0.

The base station may notify the UE of configuration information, such as frequency allocation information, time allocation information, and numerology, regarding control resource region #0 through the MIB. In addition, the base station may notify the UE of configuration information regarding the monitoring periodicity and occasion with regard to control resource set #0, that is, configuration information regarding search space #0, through the MIB. The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like. The ID of the initial bandwidth part may be considered to be 0.

The bandwidth part-related configuration supported by the 5G communication system may be used for various purposes.

According to some embodiments, if the bandwidth supported by the UE is smaller than the system bandwidth, this may be supported through the bandwidth part configuration. For example, the base station may configure the frequency location of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a

bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

If a UE has one or more bandwidth parts configured therefor, the base station may indicate, to the UE, to change (or switch or transition) the bandwidth parts by using a bandwidth part indicator field within DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined as given below, for example.

[Table 3]

| $\mu$ | NR Slot length (ms) | BWP switch delay $T_{BWP}$ (slots) Type 1[Note 1] |
|---|---|---|
| 0 | 1 | 1 |
| 1 | 0.5 | 2 |
| 2 | 0.25 | 3 |
| 3 | 0.125 | 6 |
| Note 1: Depends on UE capability.<br>Note 2: If the BWP switch involves changing of SCS, the BWP switch delay is determined by the larger one between the SCS before BWP switch and the SCS after BWP switch. | | |

The requirements for the bandwidth part change delay time support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a time point not later than slot n+$T_{BWP}$, and may transmit/receive a data channel scheduled by the corresponding DCI in the newly changed bandwidth part. If the base station wants to schedule a data channel by using the new bandwidth part, the base station may determine time domain resource allocation regarding the data channel in consideration of the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI indicating a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

Next, synchronization signal/physical broadcast channel (SS/PBCH) blocks in 5G will be described.

An SS/PBCH block may refer to a physical layer channel block including a primary synchronization signal (PSS), a secondary synchronization signal (SSS), and a PBCH. Details thereof are as follows.

- PSS: refers to a signal which becomes a reference for downlink time/frequency synchronization, and providea some partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.

- SS/PBCH block: the SS/PBCH block includes a combination of a PSS, an SSS, and a PBCH. One or multiple SS/PBCH blocks may be transmitted within a time period of 5 ms, and each transmitted SS/PBCH block may be distinguished by an index.

The UE may detect the PSS and SSS in the initial access step, and may decode the PBCH. The UE may acquire an MIB from the PBCH, and from this, control resource set #0 (which may correspond to a control resource set having a control resource set index of 0) may be configured for the UE. The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

Next, downlink control information (DCI) in a 5G communication system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response (RAR). That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a RAR message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information, for example.

[Table 4]

| |
|---|
| - Identifier for DCI formats - [1] bit<br>- Frequency domain resource assignment - $[\lceil \log_2(N_{RB}^{UL,BWP}(N_{RB}^{UL,BWP}+1)/2) \rceil]$ bits<br>- Time domain resource assignment - X bits<br>- Frequency hopping flag - 1 bit.<br>- Modulation and coding scheme - 5 bits<br>- New data indicator - 1 bit<br>- Redundancy version - 2 bits<br>- HARQ process number - 4 bits<br>- Transmit power control (TPC) command for scheduled PUSCH - [2] bits<br>- Uplink/ supplementary uplink (UL/SUL) indicator - 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information, for example.

[Table 5]

| |
|---|
| - Carrier indicator - 0 or 3 bits<br>- UL/SUL indicator - 0 or 1 bit<br>- Identifier for DCI formats - [1] bits<br>- Bandwidth part indicator - 0, 1 or 2 bits<br>- Frequency domain resource assignment<br>◦ For resource allocation type 0, $\lceil N_{RB}^{UL,BWP} / P \rceil$ bits<br>◦ For resource allocation type 1, $\lceil \log_2 (N_{RB}^{UL,BWP} (N_{RB}^{UL,BWP} + 1) / 2) \rceil$ bits<br>- Time domain resource assignment -1, 2, 3, or 4 bits<br>- Virtual resource block (VRB)-to-physical resource block (PRB) mapping - 0 or 1 bit, only for resource allocation type 1.<br>◦ 0 bit if only resource allocation type 0 is configured;<br>◦ 1 bit otherwise.<br>- Frequency hopping flag - 0 or 1 bit, only for resource allocation type 1.<br>◦ 0 bit if only resource allocation type 0 is configured;<br>◦ 1 bit otherwise.<br>- Modulation and coding scheme - 5 bits<br>- New data indicator - 1 bit<br>- Redundancy version - 2 bits<br>- HARQ process number - 4 bits<br>- 1st downlink assignment index- 1 or 2 bits<br>◦ 1 bit for semi-static HARQ-ACK codebook;<br>◦ 2 bits for dynamic HARQ-ACK codebook with single HARQ-ACK codebook.<br>- 2nd downlink assignment index - 0 or 2 bits<br>◦ 2 bits for dynamic HARQ-ACK codebook with two HARQ-ACK sub-codebooks;<br>o 0 bit otherwise.<br>- TPC command for scheduled PUSCH - 2 bits<br>- SRS resource indicator - $\left\lceil \log_2 \left( \sum_{k=1}^{L_{max}} \binom{N_{SRS}}{k} \right) \right\rceil$ or $\lceil \log_2 (N_{SRS}) \rceil$ bits<br>◦ $\left\lceil \log_2 \left( \sum_{k=1}^{L_{max}} \binom{N_{SRS}}{k} \right) \right\rceil$ bits for non-codebook based PUSCH transmission;<br>◦ $\lceil \log_2 (N_{SRS}) \rceil$ bits for codebook based PUSCH transmission.<br>- Precoding information and number of layers - up to 6 bits<br>- Antenna ports - up to 5 bits<br>- SRS request - 2 bits<br>- Channel state information (CSI) request - 0, 1, 2, 3, 4, 5, or 6 bits<br>- Code block group (CBG) transmission information - 0, 2, 4, 6, or 8 bits<br>- Phase tracking reference signal (PTRS)-demodulation reference signal (DMRS) association - 0 or 2 bits.<br>- beta_offset indicator - 0 or 2 bits<br>- DMRS sequence initialization - 0 or 1 bit |

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information, for example.

[Table 6]

| |
|---|
| - Identifier for DCI formats - [1] bit<br>- Frequency domain resource assignment - $[\lceil \log_2(N_{RB}^{DL,BWP}(N_{RB}^{DL,BWP}+1)/2) \rceil]$ bits<br>- Time domain resource assignment - X bits<br>- VRB-to-PRB mapping - 1 bit.<br>- Modulation and coding scheme - 5 bits<br>- New data indicator - 1 bit<br>- Redundancy version - 2 bits<br>- HARQ process number - 4 bits<br>- Downlink assignment index - 2 bits<br>- TPC command for scheduled PUCCH - [2] bits<br>- Physical uplink control channel (PUCCH) resource indicator - 3 bits<br>- PDSCH-to-HARQ feedback timing indicator - [3] bits |

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information, for example.

[Table 7]

| |
|---|
| - Carrier indicator - 0 or 3 bits<br>- Identifier for DCI formats - [1] bits<br>- Bandwidth part indicator - 0, 1 or 2 bits<br>- Frequency domain resource assignment<br>◦ For resource allocation type 0, $\lceil N_{RB}^{DL,BWP}/P \rceil$ bits<br>◦ For resource allocation type 1,<br>$\lceil \log_2(N_{RB}^{DL,BWP}(N_{RB}^{DL,BWP}+1)/2) \rceil$ bits<br>- Time domain resource assignment -1, 2, 3, or 4 bits<br>- VRB-to-PRB mapping - 0 or 1 bit, only for resource allocation type 1.<br>◦ 0 bit if only resource allocation type 0 is configured;<br>◦ 1 bit otherwise.<br>- Physical resource block (PRB) bundling size indicator - 0 or 1 bit<br>- Rate matching indicator - 0, 1, or 2 bits<br>- Zero power (ZP) channel state information (CSI)-reference signal (RS) trigger - 0, 1, or 2 bits |
| For transport block 1:<br>- Modulation and coding scheme - 5 bits<br>- New data indicator - 1 bit<br>- Redundancy version - 2 bits |
| For transport block 2:<br>- Modulation and coding scheme - 5 bits<br>- New data indicator - 1 bit<br>- Redundancy version - 2 bits<br>- HARQ process number - 4 bits<br>- Downlink assignment index - 0 or 2 or 4 bits<br>- TPC command for scheduled PUCCH - 2 bits<br>- PUCCH resource indicator - 3 bits<br>- PDSCH-to-HARQ_feedback timing indicator - 3 bits<br>- Antenna ports - 4, 5 or 6 bits |

(continued)

| For transport block 2:<br>- Transmission configuration indication - 0 or 3 bits<br>- SRS request - 2 bits<br>- CBG transmission information - 0, 2, 4, 6, or 8 bits<br>- CBG flushing out information - 0 or 1 bit<br>- DMRS sequence initialization - 1 bit |
|---|

Hereinafter, a downlink control channel in a 5G communication system will be described in more detail with reference to the accompanying drawings.

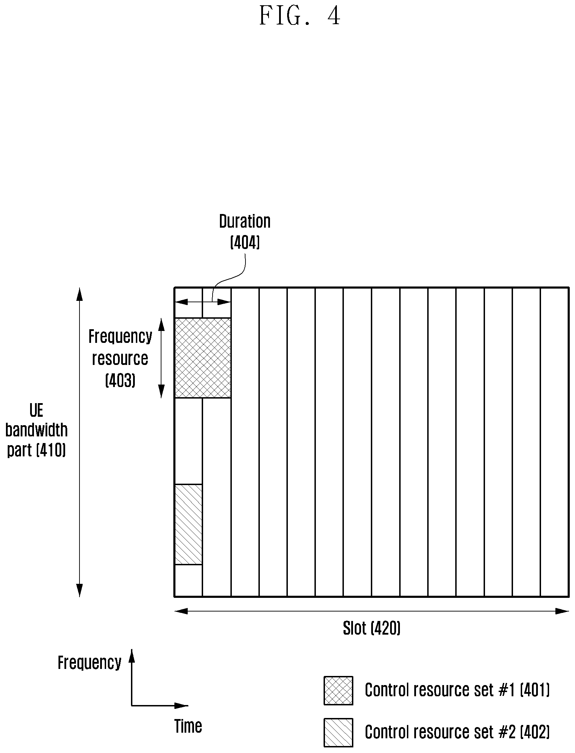

FIG. 4 illustrates an example of a control resource set (CORESET) used to transmit a downlink control channel in a 5G communication system. FIG. 4 illustrates an example in which a UE bandwidth part 410 is configured along the frequency axis, and two control resource sets (control resource set #1 401 and control resource set #2 402) are configured within one slot 420 along the time axis. The control resource sets 401 and 402 may be configured in a specific frequency resource 410 within the entire UE bandwidth part 403 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in the 5G system described above may be configured for a UE by a base station through higher layer signaling (e.g., system information, master information block (MIB), radio resource control (RRC) signaling). The description that a control resource set is configured for a UE means that information such as a control resource set identity, the control resource set's frequency location, and the control resource set's symbol duration is provided. For example, the following pieces of information may be included.

[Table 8]

```
ConControlResourceSet ::=                    SEQUENCE {
    -- Corresponds to L1 parameter 'CORESET-ID'

    controlResourceSetId              ControlResourceSetId,
    (control resource set identity)
    frequencyDomainResources              BIT STRING (SIZE (45)),
    (frequency domain resource assignment information)
    duration                          INTEGER (1..maxCoReSetDuration),
    (time domain resource assignment information)
    cce-REG-MappingType                          CHOICE {
    (CCE-to-REG mapping type)
        interleaved                          SEQUENCE {

            reg-BundleSize                       ENUMERATED {n2, n3,
n6},
         (REG bundle size)

            precoderGranularity                  ENUMERATED {sameAs
REG-bundle, allContiguousRBs},

            interleaverSize                      ENUMERATED {n2, n3,
n6}
            (interleaver size)

            shiftIndex                           INTEGER(0..maxNrofPhy
sicalResourceBlocks-1)                               OPTIONAL
          (interleaver shift)
        },
    nonInterleaved                        NULL
    },
    tci-StatesPDCCH                          SEQUENCE(SIZE (1..maxNro
fTCI-StatesPDCCH)) OF TCI-StateId            OPTIONAL,
    (QCL configuration information)
    tci-PresentInDCI                  ENUMERATED {enabled}
                                           OPTIONAL,     ... Need S
}
```

In Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (OCLed) with a DMRS transmitted in a corresponding control resource set.

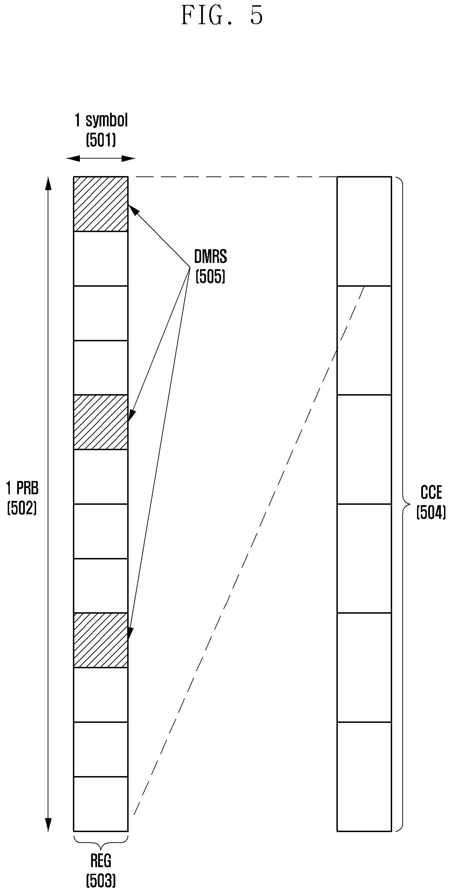

FIG. 5 illustrates an example of a basic unit of time and frequency resources constituting a downlink control channel available in a 5G communication system. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In the 5G communication system, parameters for a search space regarding a PDCCH may be configured for the UE by the base station through higher layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the following pieces of information may be included.

[Table 9]

```
SearchSpace ::=                              SEQUENCE {
    -- Identity of the search space. SearchSpaceId = 0 identifies the SearchSpace configured v
ia PBCH (MIB) or ServingCellConfigCommon.
    searchSpaceId                                SearchSpaceId,
   (search space identity)
    controlResourceSetId                     ControlResourceSetId,
   (control resource set identity)
    monitoringSlotPeriodicityAndOffset           CHOICE {
   (monitoring slot level periodicity)
        sl1                                          NULL,
        sl2                                          INTEGER (0..1),
        sl4                                          INTEGER (0..3),
        sl5                                      INTEGER (0..4),
        sl8                                          INTEGER (0..7),
        sl10                                         INTEGER (0..9),
        sl16                                         INTEGER (0..15),
        sl20                                         INTEGER (0..19)
```

```
    }
                              OPTIONAL,
   duration (monitoring duration)                INTEGER (2..2559)
   monitoringSymbolsWithinSlot                   BIT STRING (SIZE (14))
                                   OPTIONAL,
   (monitoring symbols within slot)
   nrofCandidates                         SEQUENCE {
   (number of PDCCH candidates for each aggregation level)
      aggregationLevel1                   ENUMERATED {n0, n1, n2, n3, n4, n5, n6, n8},
      aggregationLevel2                   ENUMERATED {n0, n1, n2, n3, n4, n5, n6, n8},
      aggregationLevel4                   ENUMERATED {n0, n1, n2, n3, n4, n5, n6, n8},
      aggregationLevel8                   ENUMERATED {n0, n1, n2, n3, n4, n5, n6, n8},
      aggregationLevel16                  ENUMERATED {n0, n1, n2, n3, n4, n5, n6, n8}
   },

   searchSpaceType                        CHOICE {
   (search space type)
      -- Configures this search space as common search space (CSS) and DCI formats to
monitor.
      common                                     SEQUENCE {
   (common search space)
     }
      ue-Specific                            SEQUENCE {
   (UE-specific search space)
         -- Indicates whether the UE monitors in this USS for DCI formats 0-0 and 1-0 o
r for formats 0-1 and 1-1.
         formats                                 ENUMERATED {formats0-0-And-1-0, for
mats0-1-And-1-1},
   ...
}
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.
Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS
The DCI formats enumerated above may follow the definitions given below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM s ymbol(s) where UE may assume no transmission is inte nded for the UE |
| 2_2 | Transmission of TPC commands for PUCCH and PUSC H |
| 2_3 | Transmission of a group of TPC commands for SRS tr ansmissions by one or more UEs |

In a 5G communication system, the search space at aggregation level L in connection with CORESET p and search space set s may be expressed by Equation 1 below.

[Equation 1]

$$L \cdot \left\{ \left( Y_{p,n^{\mu}_{s,f}} + \left\lfloor \frac{m_{s,n_{CI}} \cdot N_{CCE,p}}{L \cdot M^{(L)}_{s,max}} \right\rfloor + n_{CI} \right) mod \left\lfloor \frac{N_{CCE,p}}{L} \right\rfloor \right\} + i$$

- $L$: agregaton level
- $n_{CI}$: carrier index
- $N_{CCE,p}$: total number of CCEs existing in control resource set $p$

- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} - 1$ : PDCCH candidate index at aggregation level L
- $i = 0, \ldots, L - 1$
- $Y_{p,n_{s,f}^{\mu}} = \left(A_p \cdot Y_{p,n_{s,f}^{\mu}-1}\right) \bmod D$ , $Y_{p,-1} = n_{RNTI} \neq 0$, $A_p = 39827$ *for pmod3* = 0 , $A_p = 39829$ *for pmod3* = 1 , $A_p = 39839$ *for pmod3* = 2, $D = 65537$
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In a 5G communication system, multiple search space sets may be configured by different parameters (for example, parameters in Table 10), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

In LTE and NR, a UE may perform a procedure in which, while being connected to a serving base station, the UE may report capability supported by the UE to the corresponding base station. In the following description, the above-described procedure will be referred to as a UE capability report.

The base station may transfer a UE capability enquiry message to a UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE may configure UE capability according to band information and RAT type requested by the base station. The UE may configure the UE capability, as follows.

1. If the UE receives a list regarding LTE and/or NR bands from the base station at a UE capability request, the UE configures band combinations (BCs) regarding EN-DC and NR standalone (SA). That is, the UE configures a candidate list of BCs regarding EN-DC and NR SA, based on bands received from the base station at a request through FreqBandList. Bands have priority in the order described in FreqBandList.

2. If the base station configures "eutra-nr-only" flag or "eutra" flag and requests a UE capability report, the UE removes everything related to NR SA BCs from the configured BC candidate list. Such an operation may occur only if an LTE base station (eNB) requests "eutra" capability.

3. The UE then removes fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".

4. The UE selects BCs appropriate for the requested RAT type from the final "candidate BC list" and thereby selects BCs to report. In this step, the UE configures supportedBandCombinationList in a determined order. That is, the UE configures BCs and UE capability to report according to a preconfigured rat-Type order. (nr - > eutra-nr -> eutra). In addition, the UE configures featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of

containers of UE-NR-Capabilities and UE-MRDC-Capabilities.

5. If the requested RAT type is eutra-nr and has an influence, featureSetCombinations is included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

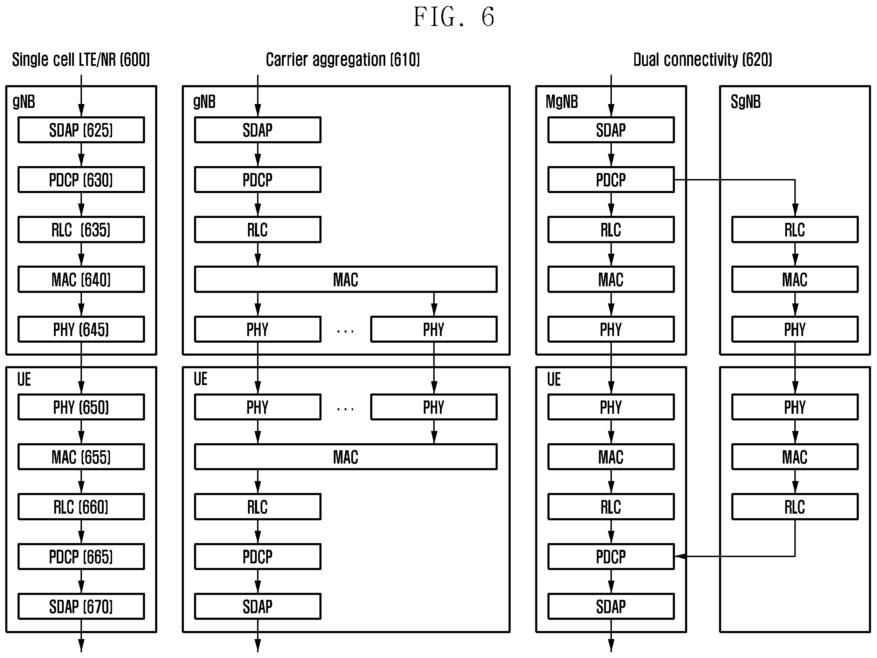

FIG. 6 illustrates an example of radio protocol structuresw of a base station and a UE in single cell, carrier aggregation (CA), and dual connectivity (DC) situations.

Referring to FIG. 6, a radio protocol of a 5G communication system includes an NR service data adaptation protocol (SDAP) 625 or 670, an NR packet data convergence protocol (PDCP) 630 or 665, an NR radio link control (RLC) 635 or 660, and an NR medium access controls (MAC) 640 or 655, on each of UE and NR base station sides.

The main functions of the NR SDAP 625 or 670 may include some of functions below.

- Transfer of user plane data
- Mapping between a quality of service (QoS) flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating QoS. The QoS information may be used as data processing priority, scheduling information, etc. for smoothly supporting services.

The main functions of the NR PDCP 630 or 665 may include some of functions below.

**[0106]** - Header compression and decompression: robust header compression (ROHC) only

- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above-mentioned functions, the reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC 635 or 660 may include some of functions below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above-mentioned functions, the in-sequence delivery of the NR RLC device refers to a function of delivering RLC SDUs, received from the lower layer, to the upper layer in sequence. The in-sequence delivery of the NR RLC device may include a function of, if one original RLC SDU is segmented into multiple RLC SDUs and the segmented RLC SDUs are received, reassembling the RLC SDUs and delivering the reassembled RLC SDUs, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs. The in-sequence delivery of the NR RLC device may include a function of, if there is a lost RLC SDU, successively delivering only RLC SDUs before the lost RLC SDU to the higher layer, and may include a function of, if a predetermined timer has expired although there is a lost RLC SDU, successively delivering all RLC SDUs received before the timer was started to the higher layer. Alternatively, the in-sequence delivery of the NR RLC device may include a function of, if a predetermined timer has expired although there is a lost RLC SDU, successively delivering all RLC SDUs received until now to the higher layer. In addition, the in-sequence delivery of the NR RLC device may process RLC PDUs in the received order (regardless of the sequence number order, in the order of arrival) and deliver same to the PDCP device regardless of the order (out-of-sequence delivery), and may, in the case of segments, receive segments which are stored in a buffer or which are to be received later, reconfigure same into one complete RLC PDU, process, and deliver same to the PDCP device. The NR RLC layer may include no concatenation function, which may be performed in the NR MAC layer or replaced with a multiplexing function of the NR MAC layer.

In the above-mentioned functions, the out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC 640 or 655 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 645 or 650 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as 600. Contrarily, in case that the base station transmits data to the UE, based on carrier aggregation (CA) which uses multiple carriers in a single TRP, the base station and the UE may use a protocol structure which has a single structure up to the RLC, but multiplexes the PHY layer through a MAC layer, such as 610. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as 620.

Hereinafter, embodiments of the disclosure will be described in detail in conjunction with the accompanying drawings. The contents of the disclosure may be applied to FDD and TDD systems. As used herein, higher signaling (or higher layer signaling) is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through various embodiments in the disclosure, but the embodiments are not independent, and one or more embodiments may be applied simultaneously or in combination.

Hereinafter, a measurement gap will be described. Before a handover, a UE generally measures the cell power (signal quality) of a target cell and reports same to the base station, and thus, the base station may determine whether to hand over the corresponding UE to the target cell, based on the reported measurement results. From the UE's perspective, measuring of the signal quality of the target cell may require more complexity in case that the target cell is in a frequency different from that of the current cell (inter-frequency measurement) than in case that the target cell is in the same frequency as the serving cell (intra-frequency measurement). This is because the former case may require implementation of two RF transceivers for different frequency measurements, and solutions using two types of such transceivers may have several practical problems. First, implementing an additional transceiver requires additional costs, and second, in case that the frequency of the serving cell and the frequency of the target cell are close to each other, interference may occur between these frequencies.

In order to solve these problems, a measurement gap has been introduced, and in this interval, the UE basically does not perform transmission and reception. Therefore, since there is no signal transmission/reception during the measurement gap, the UE may switch to the target cell to perform signal quality measurement and then return to the serving cell. To this end, the base station may pre-configure, for the UE, a higher layer signal related to a measurement gap to thus support and enable the UE to measure the signal quality of the target cell during the corresponding gap period.

In case that a UE requires a measurement gap to identify and measure intra-frequency cells and/or inter-frequency cells and/or inter-RAT E-UTRAN cells, and in case that the UE does not support independent measurement gap patterns for different frequency ranges, the network shall provide a per-UE measurement gap pattern for concurrent monitoring of all frequency layers in order to satisfy the requirements of the following paragraphs.

In case that the UE requires a measurement gap to identify and measure intra-frequency cells and/or inter-frequency cells and/or inter-RAT E-UTRAN cells, and in case that the UE supports independent measurement gap patterns for different frequency ranges, the network is required to provide a per-FR measurement gap pattern in order to monitor all frequency layers of each frequency range independently and simultaneously, or a per-UE measurement gap pattern for monitoring all frequency layers of each frequency range simultaneously, in order to apply the requirements of the following clauses.

In case that the UE is configured through the LTE positioning protocol (LPP) for reference signal time difference (RSTD), positioning reference signal (PRS)-reference signal received power (RSRP), and the UE Rx-Tx time difference measurement, the network should provide the following.

- A per-UE measurement gap pattern for simultaneous monitoring of intra-frequency, inter-frequency, and/or inter-RAT frequency layer for all positioning frequency layers and all frequency ranges
- For a measurement gap pattern other than measurement gap patterns #24 and #25, in the case that the UE supports independent measurement gap patterns for different frequency ranges for PRS measurement, a per-FR measurement gap pattern for the simultaneous monitoring of all positioning frequency layers and intra-frequency, inter-frequency cells, and/or inter-RAT frequency layers of the corresponding frequency range.

During a per-UE measurement gap, the UE is not required to:

- except for signal reception used for a random access procedure and radio resource management (RRM) measurement(s) according to TS38.321, perform reception/transmission from/to the corresponding E-UTRAN PCell, E-UTRAN SCell(s), and the NR serving cell or transmission to same;
- except for signal reception used for a random access procedure, PRS measurement(s), and RRM measurement(s) according to TS38.321, perform reception/transmission from/to a corresponding NR serving cell for a single carrier (SC) or CA configuration (SA) or transmission to same;
- except for signal reception used for a random access procedure, PRS measurement(s), and RRM measurement(s) according to TS38.321, perform reception/transmission from/to the corresponding PCell, SCell(s), and E-UTRAN serving cell for NR-E-UTRA dual connectivity, or transmission to same; and
- except for signal reception used for a random access procedure, PRS measurement(s), and RRM measurement(s) according to TS38.321, perform reception/transmission from/to the corresponding NR serving cell for NR-DC or transmission to same.

During a per-FR measurement gap, the UE is not is not required to:

- except for signal reception used for a random access procedure and RRM measurement(s) according to TS38.321, perform reception/transmission from/to a corresponding E-UTRAN PCell, E-UTRAN SCell(s), and NR serving cell or transmission to same;
- except for signal reception used for a random access procedure, PRS measurement(s), and RRM measurement(s) according to TS38.321, perform reception/transmission to the corresponding NR serving cell or transmission to same;

- except for signal reception used for a random access procedure, PRS measurement(s), and RRM measurement(s) according to TS38.321, perform reception/transmission to a PCell, SCell(s), and E-UTRAN serving cell for NR-E-UTRA dual connectivity or transmission to same; and
- except for signal reception used for a random access procedure, PRS measurement(s), and RRM measurement(s) according to TS38.321, perform reception/transmission to the corresponding NR serving cell or transmission to same.

The UE is required to support the measurement gap patterns listed in Table 11 based on the applicability specified in Table 12. The UE determines a measurement gap timing, based on a gap offset configuration and a measurement gap timing advance configuration provided by higher layer signaling specified in TS 38.331 and TS 36.331.

[Table 11]

| Gap Pattern Id | Measurement Gap Length (MGL, ms) | Measurement Gap Repetition Period (MGRP, ms) |
|---|---|---|
| 0 | 6 | 40 |
| 1 | 6 | 80 |
| 2 | 3 | 40 |
| 3 | 3 | 80 |
| 4 | 6 | 20 |
| 5 | 6 | 160 |
| 6 | 4 | 20 |
| 7 | 4 | 40 |
| 8 | 4 | 80 |
| 9 | 4 | 160 |
| 10 | 3 | 20 |
| 11 | 3 | 160 |
| 12 | 5.5 | 20 |
| 13 | 5.5 | 40 |
| 14 | 5.5 | 80 |
| 15 | 5.5 | 160 |
| 16 | 3.5 | 20 |
| 17 | 3.5 | 40 |
| 18 | 3.5 | 80 |
| 19 | 3.5 | 160 |
| 20 | 1.5 | 20 |
| 21 | 1.5 | 40 |
| 22 | 1.5 | 80 |
| 23 | 1.5 | 160 |
| 24 | 10 | 80 |
| 25 | 20 | 160 |

[Table 12]

| Measurement gap pattern configuration | Serving cell | Measurement Purpose[Note 5] | Applicable Gap Pattern Id |
|---|---|---|---|
| Per-UE Measurement gap | E-UTRA + FR1, or E-UTRA + FR2, or E-UTRA + FR1 + FR2 | non-NR RAT [Note1,2] | 0,1,2,3 |
| | | FR1 and/or FR2 [Note 7] | 0-11, 24, 25 |
| | | non-NR RAT[Note1,2] and FR1 and/or FR2 [Note 7] | 0, 1, 2, 3, 4, 6, 7, 8,10, 24 |
| Per-FR measurement gap | E-UTRA and, FR1 if configured | non-NR RAT [Note1,2] | 0,1,2,3 |
| | FR2 if configured | | No gap |
| | E-UTRA and, FR1 if configured | FR1 only | 0-11 |
| | FR2 if configured | | No gap |
| | E-UTRA and, FR1 if configured | FR2 only | No gap |
| | FR2 if configured | | 12-23 |
| | E-UTRA and, FR1 if configured | non-NR RAT [Note1,2] and FR1 | 0, 1, 2, 3, 4, 6, 7, 8,10 |
| | FR2 if configured | | No gap |
| | E-UTRA and, FR1 if configured | FR1 and FR2 | 0-11 |
| | FR2 if configured | | 12-23 |
| | E-UTRA and, FR1 if configured | non-NR RAT [Note1,2] and FR2 | 0, 1, 2, 3, 4, 6, 7, 8,10 |
| | FR2 if configured | | 12-23 |
| | E-UTRA and, FR1 if configured | non-NR RAT [Note1,2] and FR1 and FR2 | 0, 1, 2, 3, 4, 6, 7, 8,10 |
| | FR2 if configured | | 12-23 |

Note: In E-UTRA-NR dual connectivity mode, if GSM or UTRA TDD or UTRA FDD inter-RAT frequency layer is configured to be monitored, only measurement gap pattern #0 and #1 can be used for per-FR gap in E-UTRA and FR1 if configured, or for per-UE gap. In NR-E-UTRA dual connectivity mode, if UTRA FDD inter-RAT frequency layer is configured to be monitored for SRVCC, only measurement gap pattern #0 and #1 can be used for per-FR gap in E-UTRA and FR1 if configured, or for per-UE gap.

NOTE 1: In E-UTRA-NR dual connectivity mode, non-NR RAT includes E-UTRA, UTRA and/or GSM. In NR-E-UTRA dual connectivity mode, non-NR RAT means E-UTRA, and UTRA for SRVCC.

NOTE 2: Void

NOTE 3: When E-UTRA inter-frequency RSTD measurements are configured and the UE requires measurement gaps for performing such measurements, only Gap Pattern #0 can be used.

NOTE 4: For UE supporting supportedGapPattern-NRonly-NEDC or measGapPatterns-NRonly-ENDC-r16 but not supporting supportedGapPattern for the corresponding gap patterns among GP2-11, the corresponding gap patterns are not applicable to measurement of non-NR RATs as defined in NOTE 1.

NOTE 5: Inclusion of positioning measurements: Measurement purpose which includes E-UTRA measurements includes also E-UTRA RSRP and E-UTRA RSRQ measurements for E-CID.

NOTE 6: Measurement gap patterns #24 and #25 can be requested [2] only when the UE is configured at least with any of RSTD, UE Rx-Tx, or PRS-RSRP measurements requiring such gaps and can only be used during the corresponding positioning measurement period

NOTE 7: Inclusion of positioning measurements for measurement gaps: Measurement purpose which includes any of FR1 and FR2 measurements includes also RSTD, UE Rx-Tx, and PRS-RSRP measurements.

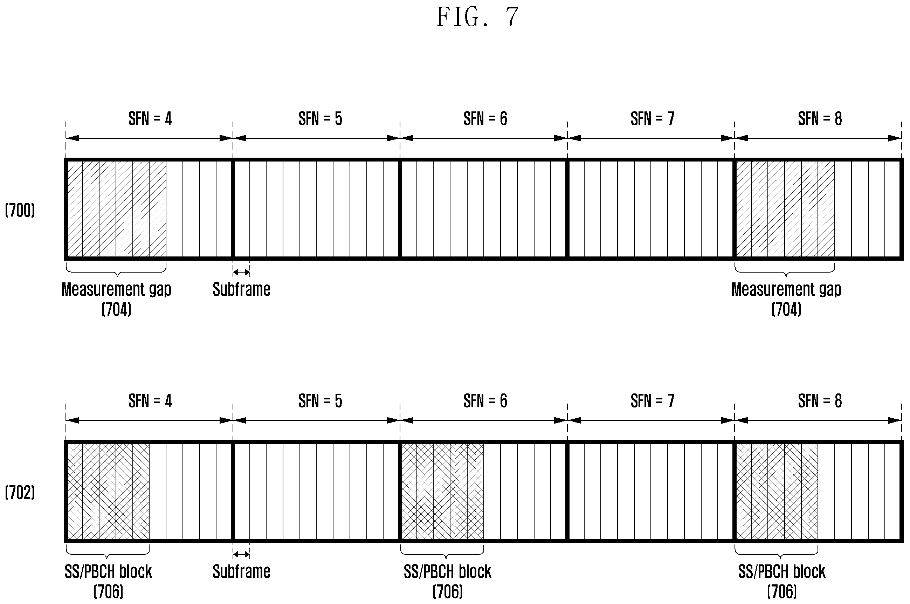

FIG. 7 is a diagram illustrating an example of a situation in which a measurement gap and an SS/PBCH block are

transmitted/received according to an embodiment of the disclosure. In FIG. 7, reference numeral 700 indicates a measurement gap configuration resource 704 of a UE in a configuration established by higher layer signaling such that, as in Table 11, a measurement gap repetition period is 40 ms, a measurement gap length is 6 ms, and a measurement offset is 0. In the configuration illustrated in FIG. 7, an SS/PBCH block 702 is configured to have a 20 ms repetition period and an SS/PBCH block 706 is transmitted during an interval of 5 ms. In the configuration illustrated in FIG. 7, reference numerals 700 and 702 indicate the same frame and, for the sake of description, separately show a situation in which a measurement gap is configured periodically and an a situation in which SS/PBCH block is transmitted and received periodically. The UE may be able to measure the received signal quality by performing channel estimation in the intra-frequency or inter-frequency domain through the SS/PBCH block in the measurement gap. In general, the base station may configure the measurement gap interval to be longer than the SS/PBCH block interval, because in the case of measuring a different frequency band or a frequency band of a different RAT, the UE may need additional time for RF retuning. The measurement gap may include an entire or a part of an SS/PBCH block transmission resource. The period of transmission/reception of the SS/PBCH block and the period of the measurement gap may be same, or the period of the measurement gap may be larger than the period of transmission/reception of the SS/PBCH block as shown in FIG. 7. In FIG. 7, SFN is the abbreviation of system frame number, and one SFN includes 10 subframes.

Hereinafter, scheduling constraints generated due to a measurement gap will be described. As described above with reference to FIG. 7, the UE may be able to perform or not uplink channel or downlink channel transmission/reception, according to the following procedures, during the measurement gap interval. During an activated measurement gap, in a corresponding frequency range of the measurement gap configured through a measurement gap-related higher layer signal, the UE operates with reference to Table 13 in a serving cell.

[Table 13]

| |
|---|
| 1> The UE does not perform HARQ feedback, SR, and CSI transmission. |
| 1> The UE does not report SRS. |
| 1> The UE does not transmit UL-SCH except for Msg3 or MSG A payload. |
| 1> In case that ra-ResponseWindow, ra-ContentionResolutionTimer, or msgB-ResponseWindow is being executed, the UE: |
| 2> searches for PDCCH. |
| 1> else |
| 2> does not monitor PDCCH. |
| 2> does not perform reception in DL-SCH. |

With regard to a measurement gap configured by the base station, the UE does not perform general data transmission and reception, as described in Table 13. Therefore, in the case of a service sensitive to delay time, such as an XR service, there is a possibility that additional delay time may be generated due to the inability to perform data transmission and reception in the corresponding period, and thus it may be difficult to satisfy the requirements of the XR service. For example, when XR traffic occurs at the start time of a measurement gap, the UE is unable to perform data transmission/reception during the measurement gap interval, and is able to perform data transmission/reception only immediately after the measurement gap ends. Therefore, in this case, there is a possibility that a delay time during at least a measurement gap interval may occur. In addition, the more frequent the repetition intervals with measurement gap configurations, the more frequently the above situations may occur. Therefore, there is a need for a method of more adaptively configuring a measurement gap interval, thereby processing traffic such as an XR service more quickly.

[First Embodiment]

The base station may adaptively indicate to the UE whether to perform channel measurement in the measurement gap in the future through DCI or MAC CE. Alternatively, even in case of a measurement gap interval, the UE may be capable of receiving or transmitting data scheduled by a DCI format including a CRC scrambled by a specific DCI format or RNTI based on Table 13. Through this, the base station may be able to more smoothly support a service sensitive to delay time, such as an XR service. For example, in case that the UE receives a DCI format including scheduling that requires a PDSCH to be received or a PUSCH to be transmitted in a resource region that overlaps or partially overlaps a measurement gap, the UE may be able to receive the PDSCH or transmit the PUSCH according to the scheduling information without performing a channel estimation of the target cell.

For example, referring to FIG. 7, in a situation in which a measurement gap 704 is periodically configured, the UE may receive a PDSCH or transmit a PUSCH in the measurement gap 704 interval configured in SFN 4 according to information separately provided by the base station in an adaptive manner. The DCI format may be a UE-specific DCI

format or a UE-common DCI format. The UE-specific DCI format is DCI information provided to a specific UE, and the UE-common DCI format is DCI information commonly transmitted to one or more groups of UEs. The UE-specific DCI format may additionally include, in DCI for scheduling a PDSCH or PUSCH, an additional bit field indicating to a corresponding UE whether the measurement gap is activated or deactivated. Through the detection of the corresponding bit field, the UE may be able to determine whether one or multiple configured measurement gap intervals are to be used in the future as a resource for performing data transmission/reception or as a measurement gap interval for conventional channel estimation.

Alternatively, the MAC CE may be used to indicate whether one or multiple configured measurement gap intervals are to be used in the future as resources for data transmission/reception or as measurement gap intervals for existing channel estimation. For example, the base station transmits a PDSCH including a MAC CE, and the UE, after receiving same, transmits UCI including HARQ-ACK information to the base station through the PUCCH or PUSCH. In case that a slot in which the PUCCH or PUSCH is transmitted is slot n, it is possible to determine that the MAC CE information indicated by the base station is applied from slot n+k. The MAC CE information may be configured to inform the time or frequency domain in which a measurement gap (repetition) interval periodically configured by a higher layer signal is activated or deactivated.

Alternatively, the bitmap information may indicate, through the value (0 or 1) of each bit of the bitmap, a deactivated or activated measurement gap interval among the measurement gap intervals to be generated in the future. The meaning of deactivation of a measurement gap interval is that the UE is allowed to data transmission and reception without performing channel estimation in the measurement gap interval. In contrast, the meaning of activation of a measurement gap interval is that the UE operates according to Table 13 during the measurement gap interval.

Alternatively, the UE may inform the base station of whether to use a configured measurement gap interval in the future, through scheduling request (SR) or configured grant PUSCH (CG PUSCH) transmission before the measurement gap. For example, the base station may provide s-MeasureConfig information to the UE. The s-MeasureConfig information indicates threshold information for controlling of the NR SpCell (special cell) RSRP measurement when the UE is required to perform measurements on other cells other than the serving cell. The selection of ssb-RSRP in s-MeasureConfig information corresponds to cell RSRP based on the SS/PBCH block, and the selection of csi-RSRP corresponds to cell RSRP of the CSI-RS. In case that the measured value is higher than or lower than the threshold, the UE may omit to perform measurement of the channel information of the neighbor cell during the measurement gap interval. Through this omission, the UE may reduce power consumption for channel measurement.

However, during the measurement gap interval, the base station does not determine whether the UE performs measurement of channel information of the adjacent cell according to s-MeasureConfig information, and thus needs to obtain accurate information on same. Therefore, the UE may provide the base station with information about whether the channel information of the neighbor cell is measured or not during the measurement gap interval according to the s-MeasureConfig information, through an uplink channel such as an SR or CG PUSCH. In addition, based on this information, the base station may be capable of scheduling data transmission/reception during a measurement gap interval in which the UE does not perform channel estimation.

Alternatively, differently from the above-described method in which whether to apply Table 13 to a configured measurement gap interval or not is informed of by a higher layer signal, a separate time interval may be separately informed of through a DCI format or MAC CE. For example, referring to FIG. 7, in case that the base station indicates, through DCI format or a MAC CE at a specific time point, that SFN 4 to SFN 8 are to be used for data transmission/reception, the UE may perform data transmission/reception by priority regardless of whether a measurement gap exists between them or not.

Before performing data transmission/reception in the measurement gap, the UE transmits UE capability related thereto to the base station, and thereby, the base station determines which UEs support the above-described function. Thereafter, the base station provides the UE with information indicating whether the measurement gap can be adaptively changed for data transmission/reception through a higher layer signal configuration. After the UE capability report and corresponding configuration of the base station as described above, it may be possible to support the above-described operations. Alternatively, differently from the above-described method described with reference to FIG. 7 under an assumption that the entire measurement gap interval is used as an interval for data transmission and reception, only a part of the measurement gap interval may be changed to an interval for data transmission and reception. For example, in the first six subframes of SFN=4 in FIG. 7, only some subframes of the configured measurement gap may not be used as the measurement gap. In this case, it is possible to assume that the UE performs measurement only in the remaining subframes used as the measurement gap. In case that the number of the remaining subframes used for the measurement gap is equal to or less than a certain number, the UE may omit to perform a measurement. For example, in case that only two subframes remain as the measurement gap, the UE may omit to perform the measurement.

[Second Embodiment]

In the first embodiment described above, a method and a procedure for changing a periodically configured conventional measurement gap into an interval to be used for data transmission/reception for a service having a sensitive delay time, such as an XR service, have been described. However, the measurement gap has been employed in a mobile communication system for the purpose of allowing a base station or a UE to determine whether to perform a handover or not, based on channel estimation between a serving cell and a target cell. Therefore, the less frequently measurement gaps exists, the more likely it is that a UE is unable to timely perform handover. In the worst case, the UE may be unable to maintain a cell connection. Therefore, it is necessary to consider an additional measurement gap for compensating for a situation in which measurement through a measurement gap cannot be performed at a specific time point.

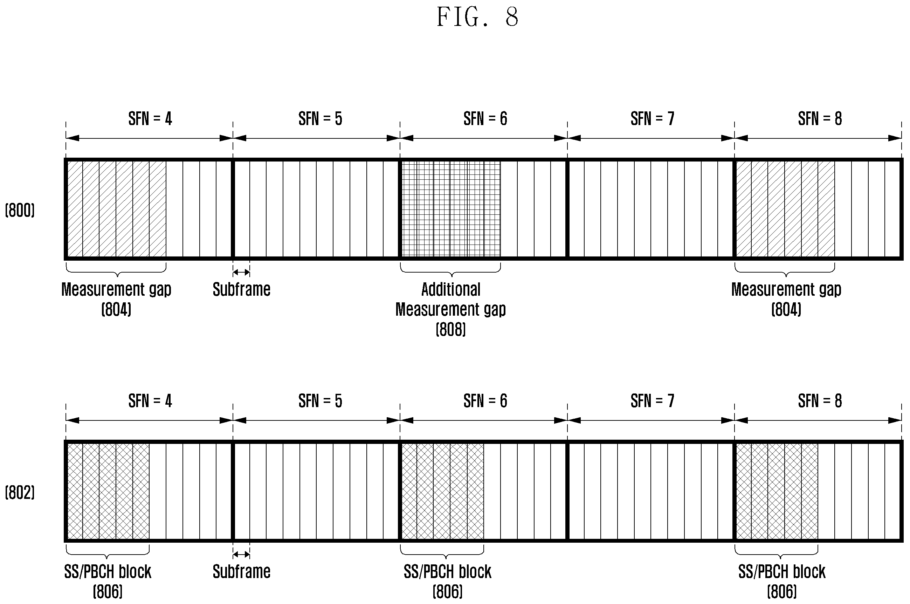

FIG. 8 is a diagram illustrating an example of a measurement gap configuration method according to an embodiment of the disclosure. In FIG. 8, reference numeral 800 indicates a measurement gap configuration resource 804 of a UE in a configuration established by higher layer signaling such that, as in Table 11, a measurement gap repetition period is 40 ms, a measurement gap length is 6 ms, and a measurement offset is 0. In the configuration illustrated in FIG. 8, an SS/PBCH block 802 is configured to have a 20 ms repetition period and an SS/PBCH block 806 is transmitted during an interval of 5 ms. For example, in case that the UE receives a PDSCH or a PUSCH in a period for data transmission/reception, which has been changed according to the method described in the first embodiment from a measurement gap 804 preconfigured in SFN=4 of the resource 800, a separate additional measurement gap 808 other than the periodically preconfigured measurement gap 804 may be configured by a higher layer signal.

A method of providing an additional measurement gap 808 may be supported by at least one of the following methods or a combination of some of the methods. In addition, the situation in which the additional measurement gap 808 is provided may be applied to only a case in which a previous or subsequent measurement gap 804 is deactivated. Therefore, in case that the previous or following measurement gap 804 is not deactivated, the UE may not apply the following methods and the base station may not provide information for performing the following methods to the UE.

- Method 2-1: A method of informing through DCI information. For example, a base station may inform multiple UEs of whether to configure an additional measurement gap, through group-common DCI such as DCI format 2_x. Each UE may be able to identify a bit field to be searched by itself in the corresponding group-common DCI, and determine whether an additional measurement gap to be applied by itself exists or not. Alternatively, the base station may inform a particular UE of whether to configure an additional measurement gap, through DCI format 1_x or DCI format 2_x. For example, the base station may inform the UE of the existence or non-existence of an additional measurement gap through a specific DCI field in the corresponding DCI format. A period to which an additional measurement gap is applied in advance may be configured by a higher layer signal, and in this case, an offset from the last symbol of the just previous measurement gap and the length of the additional measurement gap may be configured together. The unit of the length of the offset and the additional measurement gap may be a subframe unit or a slot unit configured by the UE in the corresponding carrier or BWP. Alternatively, the offset may be determined based on the last symbol of the CORESET in which the DCI information is transmitted. Further, additional measurement gap information may be provided using the SFN number and the bitmap information inside the corresponding SFN interval, besides the above-described information.

As an example, referring to FIG. 8, additional measurement gap information 808 of SFN=6 may be configured for the UE in advance by the base station through a higher layer signal, and the UE may determine whether the information 808 exists by receiving a DCI format. In case that an additional measurement gap exists, the UE may follow the method defined in Table 13. Alternatively, the UE may follow only a part of the method defined in Table 13. In case that the UE follows only a part of the method, this may be determined by the base station configuration, or may be fixed regardless of the base station configuration. For example, in Table 13, "1> the UE does not perform HARQ feedback, SR, and CSI transmission" and "1> the UE does not report SRS" may be applied or may not be applied.

- Method 2-2: A method of informing through MAC CE information. For example, the base station may transmit a PDSCH including MAC CE information to the UE, and the UE may determine whether additional measurement gap information 808 is applied, through HARQ-ACK feedback reporting for same. Most of the method is similar to method 2-1, and for example, the base station may inform the UE of the presence or absence of an additional measurement gap through an MAC CE. At this time, an offset from the last symbol of the just previous measurement gap and the length of the additional measurement gap may be configured together. The unit of the length of the offset and the additional measurement gap may be a subframe unit or a slot unit configured by the UE in the corresponding carrier or BWP. The offset may be determined based on the last symbol of a slot, a PUCCH, or a PUSCH in which the HARQ-ACK feedback is transmitted or received. In addition, the MAC CE information may have a separate logical channel ID (LCID), and thus the UE may determine, through PDSCH reception and LCID detection, that MAC CE information

indicating an additional measurement gap is included in the corresponding PDSCH. Further, additional measurement gap information may be provided using the SFN number and the bitmap information inside the corresponding SFN interval, besides the above-described information.

As an example, referring to FIG. 8, additional measurement gap information 808 of SFN=6 may be configured for the UE in advance by the base station through a higher layer signal, and the UE may determine whether the information 808 exists by receiving MAC CE. In case that an additional measurement gap exists, the UE may follow the method defined in Table 13. Alternatively, the UE may follow only a part of the method defined in Table 13. In case that the UE follows only a part of the method, this may be determined by the base station configuration, or may be fixed regardless of the base station configuration. For example, in Table 13, "1> the UE does not perform HARQ feedback, SR, and CSI transmission" and "1> the UE does not report SRS" may be applied or may not be applied.

- Method 2-3: While methods 2-1 and 2-2 are methods of explicitly indicating an additional measurement gap through a signal, method 2-3 is a method of implicitly indicating an additional measurement gap. For example, in case that a UE determines that at least a part or the whole of a measurement gap 804 of SFN=4 is deactivated by at least one of the methods described in the first embodiment, the UE may implicitly inform that an additional measurement gap 808 exists in SFN=6. In order to make this possible, the information regarding the start point (or offset) and the interval length of the additional measurement gap 808 in SFN=6 may need to be previously transferred through a higher layer signal. Conversely, in case that a measurement gap 804 of SFN=4 is activated and the UE has to perform the measurement, the UE may determine that there is no additional measurement gap 808. Alternatively, in the method described in the first embodiment, whether the additional measurement gap 808 is provided or not may be informed of together.

Through the above methods, the UEs may be able to timely provide delay-sensitive XR services, and at the same time, adaptively configure a measurement gap for mobility support, so as to reduce the handover failure rate.

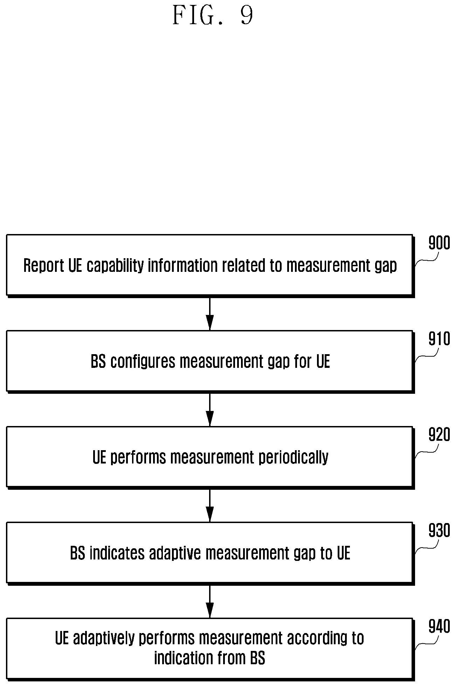

FIG. 9 illustrates an example of a procedure in which a UE performs operations related to a measurement gap according to an embodiment of the disclosure. First, the UE transmits UE capability information including information indicating whether the methods described in the first or second embodiment are supported, to the base station (900). Thereafter, the base station may transmit, to the UE, a higher layer signal including information regarding a measurement gap, such as 704 in FIG. 7, to the UE (910). Thereafter, the UE performs channel estimation in periodically configured intervals 704 (920). Meanwhile, in case that an emergency service such as an XR service occurs, the UE or the base station adaptively transmits/receives information on a change relating to the measurement gap by applying at least one of the methods described above in the first and second embodiments (930). As a result, the UE may transmit or receive data in a deactivated measurement gap and perform channel estimation in an activated measurement gap. In addition, the UE may be able to perform channel estimation without performing data transmission/reception in the additional measurement gap. Therefore, in addition to performing channel estimation in the measurement gap interval based on a preconfigured higher layer signal, the UE may adaptively perform channel estimation or transmit/receive data in the measurement gap interval by applying at least one of the methods described above in the first or second embodiment (940).

The above-described flowchart illustrates an exemplary method that may be implemented according to the principles of the disclosure, and various changes may be made for the method illustrated in the flowchart in the disclosure. For example, although illustrated as a series of steps, the various steps in each drawing may overlap, occur in parallel, occur in a different order, or occur multiple times. In another example, a step may be omitted or replaced by another step.

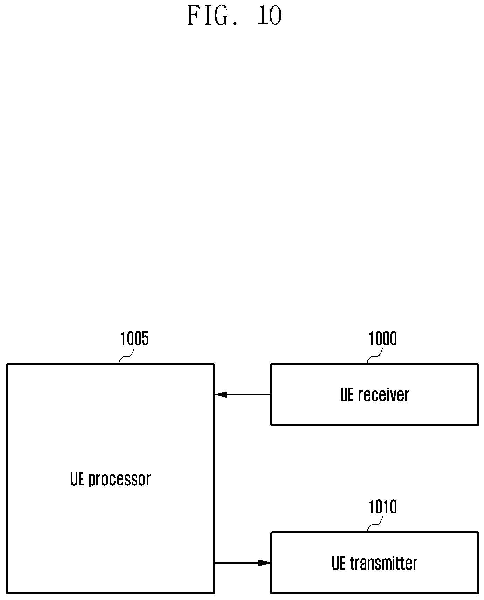

FIG. 10 illustrates a structure of a UE in a wireless communication system according to an embodiment of the disclosure.

Referring to FIG. 10, the UE may include a transceiver, which refers to a UE receiver 1000 and a UE transmitter 1010 as a whole, a memory (not illustrated), and a UE processor 1005 (or UE controller or processor). The UE transceiver 1000 and 1010, the memory, and the UE processor 1005 may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the UE. In addition, the memory may

store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes so that the UE can operate according to the above-described embodiments. The processor may include multiple processors, and the processor may perform operations of controlling the components of the UE by executing programs stored in the memory.

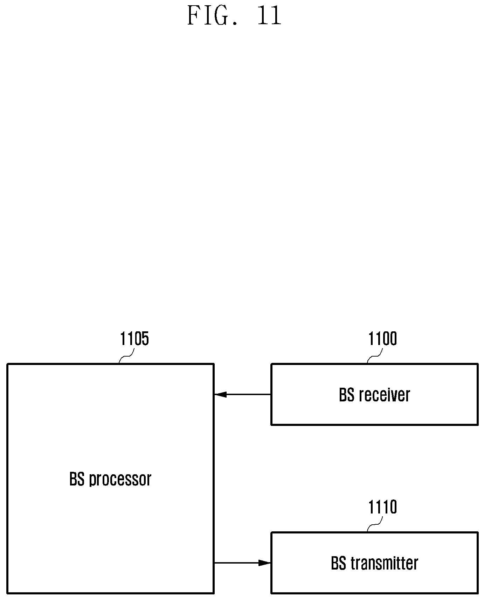

FIG. 11 illustrates a structure of a base station in a wireless communication system according to an embodiment of the disclosure.

Referring to FIG. 11, the base station may include a transceiver, which refers to a base station receiver 1100 and a base station transmitter 1110 as a whole, a memory (not illustrated), and a base station processor 1105 (or base station controller or processor). The base station transceiver 1100 and 1110, the memory, and the base station processor 1105 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes so that the base station can operate according to the above-described embodiments of the disclosure. The processor may include multiple processors, and the processor may perform operations of controlling the components of the base station by executing programs stored in the memory.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing an embodiment of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station

and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

**1.** A method performed by a terminal in a communication system, the method comprising:

receiving, from a base station, configuration information regarding a measurement gap;
receiving, from the base station, downlink control information (DCI) including information indicating whether to perform a measurement in a specific measurement gap;
identifying whether to perform a measurement in the specific measurement gap, based on the configuration information and the information indicating whether to perform the measurement; and
based on the identifying, performing the measurement or data transmission/reception in the specific measurement gap.

**2.** The method of claim 1, wherein the DCI is DCI for scheduling data.

**3.** The method of claim 1, wherein the specific measurement gap corresponds to one measurement gap.

**4.** The method of claim 1, wherein the specific measurement gap exists after a specific offset after a last symbol of a control resource set (CORESET) in which the DCI is received.

**5.** A method performed by a base station in a communication system, the method comprising:

transmitting, to the UE, configuration information regarding a measurement gap; and
transmitting downlink control information (DCI) including information indicating whether to perform a measurement in a specific measurement gap to the UE,
wherein whether the measurement or data transmission/reception is performed in the specific measurement gap is determined based on the configuration information and the information indicating whether the measurement is performed.

**6.** The method of claim 5, wherein the DCI is DCI for scheduling data.

**7.** The method of claim 5, wherein the specific measurement gap corresponds to one measurement gap.

**8.** The method of claim 5, wherein the specific measurement gap exists after a specific offset after a last symbol of a control resource set (CORESET) in which the DCI is received.

**9.** A terminal in a communication system, comprising:

a transceiver; and
a controller configured to receive, from a base station, configuration information regarding a measurement gap,

receive, from the base station, downlink control information (DCI) including information indicating whether to perform a measurement in a specific measurement gap, identify whether to perform a measurement in the specific measurement gap, based on the configuration information and the information indicating whether to perform the measurement, and perform the measurement or data transmission/reception in the specific measurement gap, based on the identifying.

**10.** The terminal of claim 9, wherein the DCI is DCI for scheduling data.

**11.** The terminal of claim 9, wherein the specific measurement gap corresponds to one measurement gap.

**12.** The terminal of claim 9, wherein the specific measurement gap exists after a specific offset after a last symbol of a control resource set (CORESET) in which the DCI is received.

**13.** A base station in a communication system, comprising:

a transceiver; and
a controller configured to transmit, to the UE, configuration information regarding a measurement gap, and transmit downlink control information (DCI) including information indicating whether to perform a measurement in a specific measurement gap to the UE,
wherein whether the measurement or data transmission/reception is performed in the specific measurement gap is determined based on the configuration information and the information indicating whether the measurement is performed.

**14.** The base station of claim 13, wherein the DCI is DCI for scheduling data.

**15.** The base station of claim 13, wherein the specific measurement gap corresponds to one measurement gap.

FIG. 1

One subframe 110
$N_{symb}^{subframe,\mu}$ OFDM symbols
1 OFDM symbols (102)
1 subcarrier (103)
$K=N_{RB,x}^{max,\mu}N_{sc}^{RB}-1$
$N_{RB}^{\mu}N_{sc}^{RB}$ subcarriers
Resource block $N_{sc}^{RB}$ subcarriers (104)
Resource element (k,l) (101)
Frequency
Time
$K=0$
$\bar{l}=0$
$\bar{l}=14\cdot 2^{\mu}-1$

FIG. 2

1 frame (200)
1 subframe
[201]
slot
[202]
slot
[203]
μ=0
(204)
μ=1
(205)
0
1
2
3
4
5
6
7
8
9
0
1
2
3
4
5
6
7
8
9
10
11
12
13
14
15
16
17
18
19

FIG. 3

BWP#1
(301)
BWP#2
(302)
UE bandwidth
(300)
Frequency

FIG. 4

Duration
(404)
Frequency
resource
(403)
UE
bandwidth
part (410)
Slot (420)
Frequency
Time
Control resource set #1 (401)
Control resource set #2 (402)

FIG. 5

1 symbol
(501)
1 PRB
(502)
DMRS
(505)
CCE
(504)
REG
(503)

FIG. 6

Single cell LTE/NR (600)
gNB
SDAP (625)
PDCP (630)
RLC (635)
MAC (640)
PHY (645)
UE
PHY (650)
MAC (655)
RLC (660)
PDCP (665)
SDAP (670)
Carrier aggregation (610)
gNB
SDAP
PDCP
RLC
MAC
PHY
...
PHY
UE
PHY
...
PHY
MAC
RLC
PDCP
SDAP
Dual connectivity (620)
MgNB
SDAP
PDCP
RLC
MAC
PHY
SgNB
RLC
MAC
PHY
UE
PHY
MAC
RLC
PDCP
SDAP
PHY
MAC
RLC

FIG. 7

SFN = 4
SFN = 5
SFN = 6
SFN = 7
SFN = 8
[700]
Measurement gap (704)
Subframe
Measurement gap (704)
SFN = 4
SFN = 5
SFN = 6
SFN = 7
SFN = 8
[702]
SS/PBCH block (706)
Subframe
SS/PBCH block (706)
SS/PBCH block (706)

FIG. 8

SFN = 4
SFN = 5
SFN = 6
SFN = 7
SFN = 8
[800]
Measurement gap
[804]
Subframe
Additional
Measurement gap
[808]
Measurement gap
[804]
SFN = 4
SFN = 5
SFN = 6
SFN = 7
SFN = 8
[802]
SS/PBCH block
[806]
Subframe
SS/PBCH block
[806]
SS/PBCH block
[806]

FIG. 9

Report UE capability information related to measurement gap
900
BS configures measurement gap for UE
910
UE performs measurement periodically
920
BS indicates adaptive measurement gap to UE
930
UE adaptively performs measurement according to indication from BS
940

FIG. 10

1005
1000
UE receiver
UE processor
1010
UE transmitter

FIG. 11

1105
1100
BS receiver
BS processor
1110
BS transmitter

**INTERNATIONAL SEARCH REPORT**

International application No. **PCT/KR2025/001244**

**A. CLASSIFICATION OF SUBJECT MATTER**

**H04W 72/23**(2023.01)i; **H04W 72/0446**(2023.01)i; **H04W 72/0457**(2023.01)i; **H04W 56/00**(2009.01)i; **H04W 8/24**(2009.01)i; **H04W 24/08**(2009.01)i; **H04L 5/00**(2006.01)i; **H04L 1/00**(2006.01)i

According to International Patent Classification (IPC) or to both national classification and IPC

**B. FIELDS SEARCHED**

Minimum documentation searched (classification system followed by classification symbols)

H04W 72/23(2023.01); H04L 5/00(2006.01); H04W 24/02(2009.01); H04W 24/08(2009.01); H04W 24/10(2009.01); H04W 28/02(2009.01); H04W 52/02(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: measurement gap configuration, DCI, data transmission, reception, measurement

**C. DOCUMENTS CONSIDERED TO BE RELEVANT**

| Category* | Citation of document, with indication, where appropriate, of the relevant passages | Relevant to claim No. |
|---|---|---|
| X | US 2023-0189041 A1 (QUALCOMM INCORPORATED) 15 June 2023 (2023-06-15) See paragraphs [0074]-[0088]; claims 1-13; and figures 11-13. | 1,3,5,7,9,11,13,15 |
| Y | | 2,6,10,14 |
| A | | 4,8,12 |
| Y | WO 2024-012124 A1 (MEDIATEK INC.) 18 January 2024 (2024-01-18) See claims 1-5; and figure 2. | 2,6,10,14 |
| A | US 2023-0318781 A1 (QUALCOMM INCORPORATED) 05 October 2023 (2023-10-05) See paragraphs [0067]-[0071]; and figure 3. | 1-15 |
| A | US 2022-0078650 A1 (LG ELECTRONICS INC.) 10 March 2022 (2022-03-10) See paragraphs [0202]-[0216]; and figures 8-9. | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **25 April 2025** | **25 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2025/001244**

| C. DOCUMENTS CONSIDERED TO BE RELEVANT | | |
|---|---|---|
| Category* | Citation of document, with indication, where appropriate, of the relevant passages | Relevant to claim No. |
| A | US 2023-0077965 A1 (SAMSUNG ELECTRONICS CO., LTD.) 16 March 2023 (2023-03-16) See paragraphs [0257]-[0258]; and figure 8. | 1-15 |

Form PCT/ISA/210 (second sheet) (July 2022)

**INTERNATIONAL SEARCH REPORT**
**Information on patent family members**

International application No.
**PCT/KR2025/001244**

| Patent document cited in search report | Publication date (day/month/year) | Patent family member(s) | Publication date (day/month/year) |
|---|---|---|---|
| US 2023-0189041 A1 | 15 June 2023 | CN 118525595 A | 20 August 2024 |
| | | EP 4445681 A1 | 16 October 2024 |
| | | KR 10-2024-0116728 A | 30 July 2024 |
| | | WO 2023-107962 A1 | 15 June 2023 |
| WO 2024-012124 A1 | 18 January 2024 | CN 118402270 A | 26 July 2024 |
| | | CN 118489268 A | 13 August 2024 |
| | | WO 2024-012125 A1 | 18 January 2024 |
| US 2023-0318781 A1 | 05 October 2023 | CN 116326186 A | 23 June 2023 |
| | | EP 4190014 A1 | 07 June 2023 |
| | | WO 2022-026173 A1 | 03 February 2022 |
| US 2022-0078650 A1 | 10 March 2022 | US 11968555 B2 | 23 April 2024 |
| | | WO 2020-122617 A1 | 18 June 2020 |
| US 2023-0077965 A1 | 16 March 2023 | EP 4397069 A1 | 10 July 2024 |
| | | WO 2023-033616 A1 | 09 March 2023 |

Form PCT/ISA/210 (patent family annex) (July 2022)